# EUROPEAN PATENT APPLICATION

(11) **EP 0 852 355 A2**
(43) Date of publication of application: **08.07.1998**
(21) Application number: 98100065.6
(22) Date of filing: 05.01.1998
(51) Int. Cl.: G06F 12/06

(54) **Programmable controller**

(30) Priority: 07.01.1997 JP 801/97
(71) Applicant: Hitachi, Ltd., Chiyoda-ku, Tokyo 101-0062 (JP); HITACHI KEIYO ENGINEERING CO., LTD., Narashino-shi Chiba-ken (JP)
(72) Inventor: Nagakura, Kenichi, Kitakambara-gun, Niigata-ken, 959-26 (JP); Sunaga, Tsutomu, Kitakambara-gun, Niigata-ken, 959-26 (JP); Hakata, Shingo, Kitakambara-gun, Niigata-ken, 959-26 (JP)
(74) Representative: Altenburg, Udo, Dipl.-Phys.

(57) **Abstract**

This invention provides a programmable controller, for increasing capacity of the data memory area which a user can use by a page function, without increasing access time to the data memory. The data memory 1 in which data is stored is divided into a common area 2 and an expansion area 4. A page specifying area 3 for specifying a page in the expansion area 4 is provided within the common area 2. A data in a memory card 5 corresponding to the page specified in the page specifying area 3 is transferred to the expansion area 4 for a CPU to access that data. And the page can be changed with a page changing device 6 within the memory card, therefore it is possible to obtain the memory capacity arbitrarily.

## Description

### BACKGROUND OF THE INVENTION

### FIELD OF THE INVENTION

The present invention relates to a programmable controller (hereinafter, it is called by "PC") having data memory area in which input/output data, calculation data and so on are stored, and in particular to a programmable controller for easily accessing to the data memory area thereof.

### DESCRIPTION OF RELATED ART

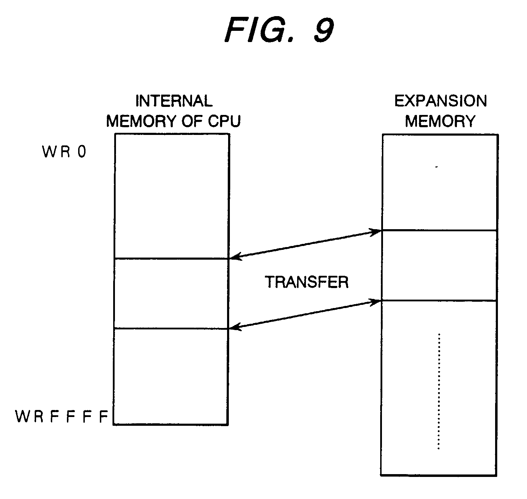

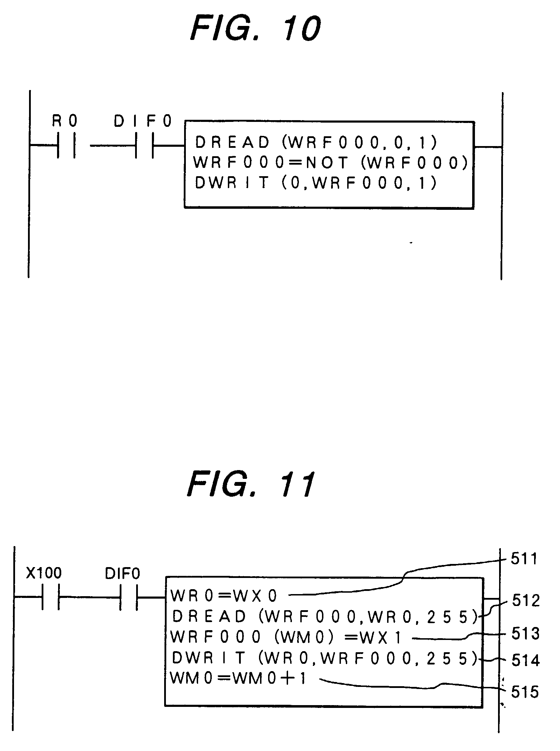

A PC of conventional art has only a data memory of small capacity. However, in recent years, such a PC is required that it can process a large amount of data and has a function capable of performing complicated control. For fulfilling such requirements, it is necessary to extend or expand data area, for instance, by using a data memory of a large capacity. One of method of the simplest methods for expanding the data area is to increase the memory capacity itself so as to add addresses of necessity, as the occasion demands. However, such way of increasing the memory capacity results in expensive product cost. Therefore, in the conventional art, there has been proposed a method for expanding the data area by using the memory effectively, as shown in Figs. 9 and 10 attached. Fig. 9 is for explanation of the method for expanding the data area in the PC, in accordance with the prior art, and Fig. 10 is for explanation of a program of the method for the data area expansion in the conventional PC.

As for reference marks used in this specification, marks such as R...., WR...., and DR.... indicate a data transfer within an internal output area, i.e., within internal registers of the PC, while marks X...., WX...., and DX.... indicate in an external I/O area, i.e., between external devices of the PC. The marks R.... and X.... indicate a data in an unit of bit, the WR.... and WX.... a data stored in a word, and the DR.... and DX.... a data stored in a double word, respectively, and reference numerals .... following thereafter are of a sexadecimal system.

Conventionally, as shown in Fig. 9, an expanded area is provided in the expansion memory, separately from the internal memory of a CPU. The internal memory can be accessed directly from a user, however, it is impossible for the user to access the expanded memory area within the expansion memory directly. When the user tries to access the data in the expanded memory area, she/he must once transfer the data to an ordinary area of the internal memory of the CPU by inputting a transfer command and so on, in advance. On the contrary, when tying to write the data into the expanded area, she/he must once write the data into the ordinary area of the internal memory of the CPU, and then transfer the written data to the expanded area by using the transfer command and so on.

As a concrete example of this, a ladder program for reversing the data in the expanded area will be explained by referring to Fig. 10. When a contact R0 is turned ON, then the data in the expanded area is transferred to the ordinary area by a DREAD command for reading out. Next, reversing process is carried out in the ordinary area by a NOT command. Thereafter, the data which is reversed by the DWRIT command for writing-in is transferred from the ordinary area to the expanded area.

Further, in the conventional art, in case of such a program that the CPU 11 takes in a data indicating sorts ("1"or "2") from an input WX0 and a data corresponding thereto from an input WX1, and it stores the data WX1 into an area of a page 1 in the expanded area when the sort data is "1" or into an area of a page 2 in the expanded area when the sort data is "2", respectively, it is programmed as is shown in Fig. 11. In this conventional program, since it necessitates such the command 512 and 513 for transferring the data between the expanded area and the ordinary area as shown in Fig. 9, it has a drawback that the period for processing the data transfer takes a long time.

In the conventional art, the more in the number of the transfer data, the longer the time period for data transfer in proportional thereto, and furthermore a part of the ordinary area must be secured vacant for the purpose of storing the data being transferred from the expanded area temporally therein.

Namely, in the conventional PC in the above, the data transfer between the ordinary area and the expanded area is necessary to access the data, therefore, there is a problem that the time period taken for the data transfer becomes long in proportional to the number of the data to be transferred. Further, the secure of vacant area in a part of the ordinary area is also necessary for the data transfer, therefore it causes a problem of low efficiency in utilization of the ordinary area.

An example of the PC with which an improvement is made on the expansion method of the data memory area is disclosed for instance in Japanese Patent Laid-Open No. Sho 64-41004 (1989). This PC comprises an internal memory which stores a program for executing and processing programs in a functional block, and an external memory which stores the programs as data, wherein smooth data transfer is achieved by a construction that includes a software switch for data transfer, which executes the data transfer when it detects a requirement of exchange of the function block in the external memory.

With this technology of this conventional method, it is convenient for maintenance, such as addition of data, alternation thereof, etc., however, it is not yet sufficient to resolve the problems mentioned in the above.

Moreover, an another example of the PC with which an improvement is made on the expansion method of the data memory area is also disclosed in such as Japanese Patent Laid-Open No. Hei 3-255507 (1991). With this PC, programs for calculation processing are memorized in the respective areas in an expanded memory, and a storing area for transferring and memorizing at least one of the programs memorized in the expanded memory is provided, in advance, in the memory for memorizing an object program of the processor executing the calculation processing, thereby the program is transferred into the storing area when the calculation processing is executed on the data of the respective areas in the expanded memory.

With this PC, the time for the data transfer becomes long in proportional to the number of the data to be transferred and it is also necessary to secure the area for transferring data from the expanded areas within the processor for calculation processing, therefore it is impossible to dissolve the problems of the present invention.

### SUMMARY OF THE INVENTION

An object of the present invention, for dissolving the problems in the extension methods of the data areas of the conventional PC, is to provide a PC (programmable controller) and an extension method for data areas thereof, wherein the data amount is increased by enlarging substantial area of the memory and making it possible to access the extension areas with ease and high speed, thereby shortening the transfer time of the data.

According to the present invention, for achieving the object in the above, there is proposed a programmable controller comprising:
a CPU portion (10) having a CPU (11), a program memory (12)and an internal data memory (13);
an external I/O unit (14) being connected to said CPU portion (10) and for enabling a connection with a peripheral device; and
a control I/O unit (15) being connected to said CPU portion (10) and for enabling connection with a target to be controlled, wherein said CPU (11) further includes an internal memory (1) in which at least a portion of data to be processed is stored temporarily, and further comprising:
   an expanded memory device (5) being provided separately from said internal memory (1) and for storing the data to be processed by said CPU (11), wherein said peripheral device to be connected to said external I/O unit (14) includes a display, **CHARACTERIZED** in that said internal memory (1) is divided into a common area (2), an expansion area (4) and a block specifying area (3), that said expansion memory device (5) includes a memory area (7) which is divided into a plurality of blocks and assigned with a series of numbers thereto, and a block changing device (6) for reading out contents of the block corresponding to the number designated by the block specifying device and transferring it to said expansion area (4), and that said CPU (11) conducts operation process on the data transferred to said expansion area (4).

Further, according to an preferable embodiment of the present invention, there is also provided a programmable controller as described in the above, wherein to said external I/O unit (14) is connected with a peripheral device (801) having a display, and contents of the block in the memory area (7) designated by said block specifying area (3) is displayed on said display of the peripheral device.

In accordance with the present invention, namely, it is possible to expand the capacity of the data area freely, depending on the user program, and the expanded area is also can be accessed with high seed in the same manner as the common area, thereby it is so constructed that a large amount of data can be processed with high speed. Further, only by a simple operation such as of specifying or designating the block, it is possible for the user to increase the capacity of the data memory arbitrarily, which is available for her/him, without delaying the access speed of the data.

### BRIEF DESCRIPTION OF THE DRAWINGS

Fig. 1 shows a memory construction of a PC in accordance with an embodiment of the present invention;
Fig. 2 shows a block diagram of an internal construction of the PC in accordance with the embodiment of the present invention;
Fig. 3 shows an external perspective view of an essential portion of the PC in accordance with the embodiment of the present invention;
Fig. 4 shows an example of program of the PC in accordance with the embodiment of the present invention;
Fig. 5 shows an another example of the program of the PC in accordance with an another embodiment of the present invention;
Fig. 6 shows a system using the PC in accordance with an another embodiment of the present invention;
Fig. 7 shows data flow in the system using the PC in accordance with the another embodiment of the present invention;
Fig. 8 shows displays on the display screen of the system using the PC in accordance with the another embodiment of the present invention, and in particular Fig. 8 (a) shows a display for selecting blocks and Fig. 8 (b) a display for showing the contents of a block selected;
Fig. 9 shows an expansion method of data area in the PC in accordance with prior art; and
Fig. 10 and 11 show a program of expansion method of data area in the PC in accordance with prior art.

### DESCRIPTION OF THE PREFERRED EMBODIMENTS

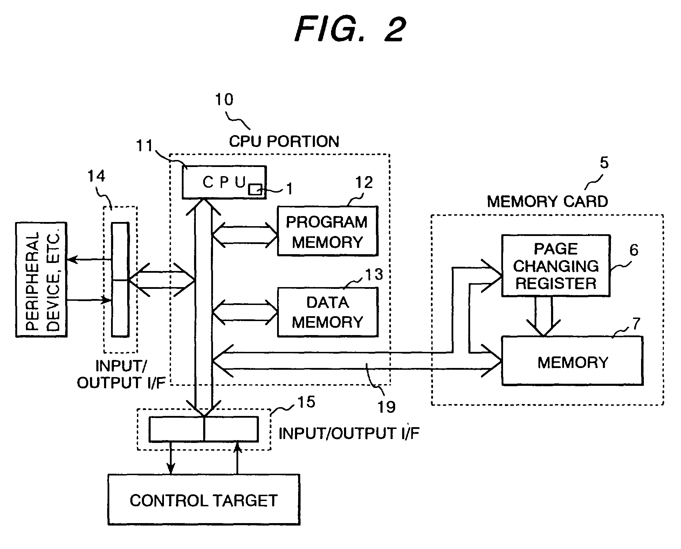

Hereinafter, detailed explanation of a programmable controller (hereinafter, it is called only "PC") in accordance with an embodiments of the present invention will be given by referring to attached drawings. In Fig. 2 showing the block diagram of the internal construction of the PC of the present embodiment, the PC is constructed with a CPU (central processing unit) 10, an external Input/Output (I/O) unit 14, a control I/O unit 15, and a memory card 5. The CPU 10 includes a programmable memory 12 and an internal data memory 13 therein. The CPU 11 has an internal memory 1 for temporally storing at least a part of data to be processed therein. Further, the memory card 5, being provided separately from the internal memory 1 and functioning as an expansion memory device for storing the data to be processed by the CPU 11, includes an expansion memory 7 to be connected to a bus of the CPU and a page changing register 17 for changing the block (called as a "page" in the present embodiment) of the expansion memory 7. Further, the external I/O unit 14 is so constructed that peripheral devices including that having a display can be connected to it, and it includes an input/output (I/O) interface for taking in user programs, etc., and for outputting various kinds of information. The control I/O unit 15 includes an I/O interface for taking in of a condition signal of a system to be controlled and for outputting a control signal.

The CPU 11 is connected through a bus 19 to the expansion memory 7 and the page changing register 17, therefore it can access them to control the data transfer thereof. Further, the CPU 11 is also connected to the programmable memory 12 through the bus, therefore, it reads in a ladder command from the programmable memory 12 to write a page data into the page changing register 17 through the bus in accordance with the command. The page changing register 17 changes an area to that of the page number which is written into the expansion memory 7. The CPU 11, reading in the next command, accesses the expansion memory 7 through the bus 19 so as to control the read-out and write-in of data of a page area which is preset.

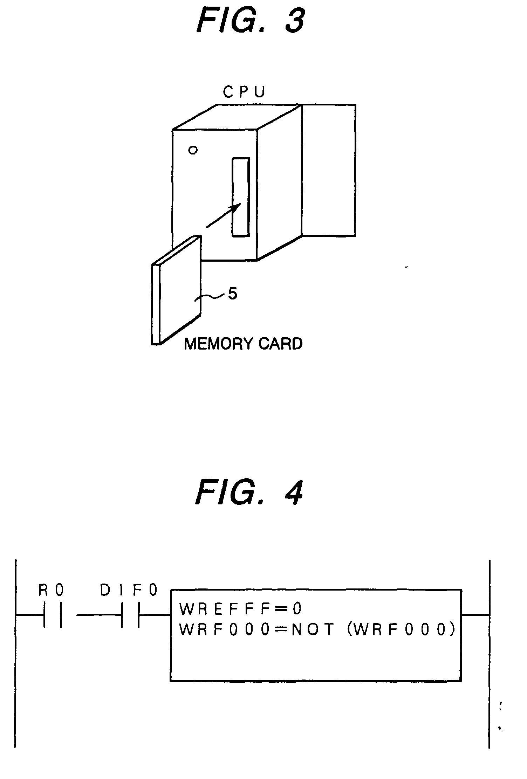

A module of the PC of the present embodiment, including the CPU therein, has an external view as shown in Fig. 3, and is provided on its front surface with a slot for mounting or inserting the memory card 5. Namely, the memory card 5 is detachably mounted into the slot, which enable easy exchange of the memory card 15.

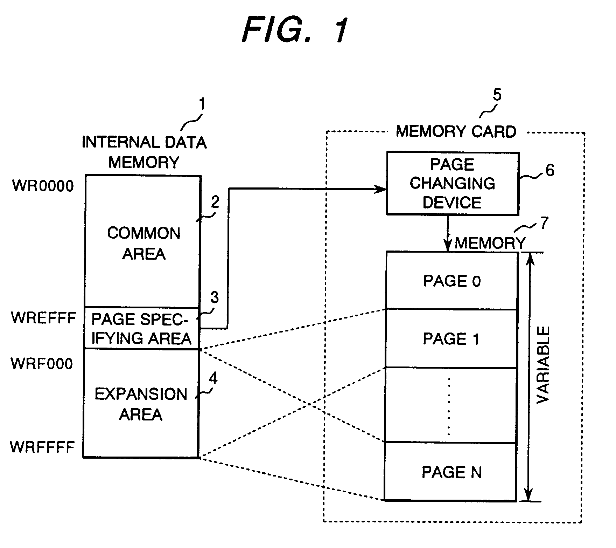

An arrangement of the areas within the memory in accordance with the present embodiment is explained referring to Fig. 1. The CPU 11 performs calculation processing on the data transferred to the expansion area 4. As is shown in Fig. 1, within the CPU 11 of the PC is provided an internal data memory 1 which is accessible for a user, and the inside of the internal data memory 1 is divided into a common area 2 as an ordinary area of memory, a page specifying area 3 for specifying a page of the expansion memory as a block specifying area, and an expansion area 4 for accessing the data of the specified page. The memory card 5 as an external memory device has a page changing device 6 for changing the page in accordance with the data of the page specifying area 3 and a memory 7 as a variable memory. The page changing device 6, as concretely shown in Fig. 2, is constructed with a page changing register. The memory 7 is divided into a plurality of pages to which a series of numbers are assigned. The memory card 5 can communicate the data with the internal data memory 1 within the CPU 11 through the bus 19 by being mounted or inserted into the slot of the CPU module.

Next, an explanation will be given on an accessing method of the data area. The internal data memory 1 is assigned with addresses WR0000 through WRFFFF, and the addresses WR0000 through WREFFF are assigned to the common area 2 and the page specifying area 3. The addresses WRF000 through WRFFFF are assigned to the expansion area 4. With the common area 2 and the page specifying area 3 of the addresses WR0000 through WREFFF, they can be accessed only by specifying or designating an I/O number of the desired data to be taken out, since the I/O number corresponds to the data one-to-one.

On the other hand, with the expansion area 4 of the addresses WRF000 through WRFFFF, it is so constructed that a plurality of data correspond to an one of I/O numbers. For purpose of making the plurality of data correspond to each one of I/O numbers, the memory 7 within the memory card 5 are divided into a plurality of areas. A control program for the CPU 11 to select one among the plurality of areas divided, and access the data within the area is stored in the program memory 12. In the present embodiment, the memory 7 is divided into (N+1) areas (N: a positive integer) in the inside thereof, and each of the areas is called "page" and is numbered with a page number of 0-N. When the data to be taken out is stored in page M (M: an integer not less than 0 and not greater than N), the page number in which the data to be taken out is stored, i.e., M is set in the page specifying area of the WREFFF. The CPU 11 reads the page number and sets the page to be taken out into the page changing register 6. The page changing register 6 selects out an area corresponding to the page number M within the memory 7, and transfers the data within the area to the area WRF000 through WRFFFF of the expansion area 4. Thereby, the data of the specified page can be read out by accessing the area of the corresponding I/O number in the expansion area 4. In case of writing data into the page M, the data is written into the page M which is transferred into the expansion area 4, and the page is transferred to an area corresponding to the page M within the memory card 5.

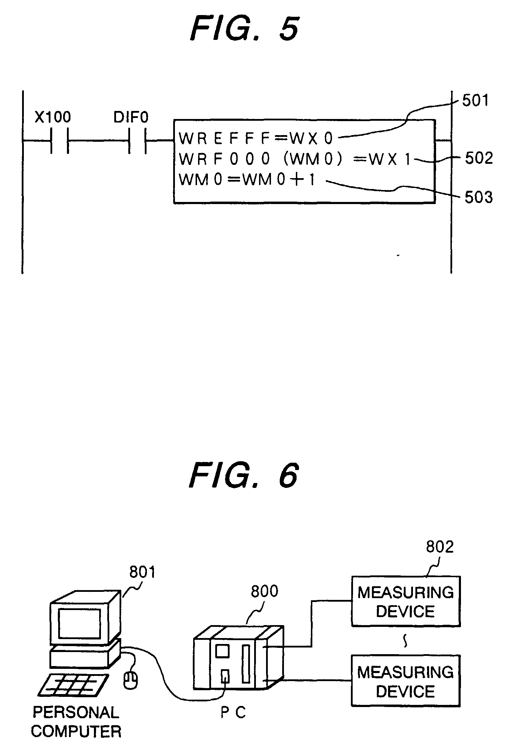

Next, a concrete example of program of the PC will be explained by referring to Figs. 4 and 5. Fig. 4 shows a ladder program for reversing the data at the top of the page 0. This ladder program is such a program that it reverses the data when the I/O number RO is turned ON. The page number 0 is written into WREFFF, thereafter, the data of WRF000, i.e., the data at the top of the page 0, is read out, being reversed by the command NOT, and written into WRF000. It is possible to access the data in the expansion area easily with the two commands mentioned in the above.

Fig. 5 shows a program for storing the data which is taken out for each of sorts. With this program the CPU 11 takes in the sort data (1 or 2) from the input WX0 and the corresponding data from the input WX1, and it stores the data into the area of the page 1 of the expansion area when the sort data is "1", while into the area of the page 2 of the expansion area when it is "2", respectively. In accordance with the program shown in Fig. 5, under the condition of X100 for starting, the CPU 11 writes the sort data into the page specifying area so as to change the page with the command 501, while writing the input data at the WX 1 into the specified page with the command 502, and renews pointer variable of the writing area with the command 503. With the present embodiment, it is possible to simplify the program and to shorten the processing time therefor.

An example of application to a control by using the PC of the present embodiment is explained by referring to Figs. 6 through 8. In this example, the PC is connected to a measuring device of a system, for example a system for mixing ingredients, and the measured data depending on kinds of mixtures are monitored on a display of a personal computer which is connected to the PC. Fig. 6 shows construction of an ingredient mixing system. The PC 800 is a PC including is the same components as shown in Fig. 2, i.e., the CPU 10, the external I/O unit 14, the control I/O unit 15 and the memory card 16, as shown in Fig. 2. The peripheral device connected is only a personal computer 801 which is connected at the external I/O unit 14. An object or target of the control is an ingredient mixing device (not shown in figure), and a measuring device 802 provided in the ingredient mixing device is connected at the control I/O unit 15. With this system, N kinds of compound feed grains are produced from combinations of several tens of ingredients, and actual result data with respect to preset compound rates are displayed on the display of the personal computer. Program for mixing is stored in the data memory 13 within the CPU 10 of the PC 800. From the personal computer 801, only selection on the mixing condition to be set and selection of the mixing condition to be displayed with the actual results thereof are made or inputted through the external I/O unit 14, and from the measuring device 802, the actual result data of the mixing is inputted through the control I/O unit 15.

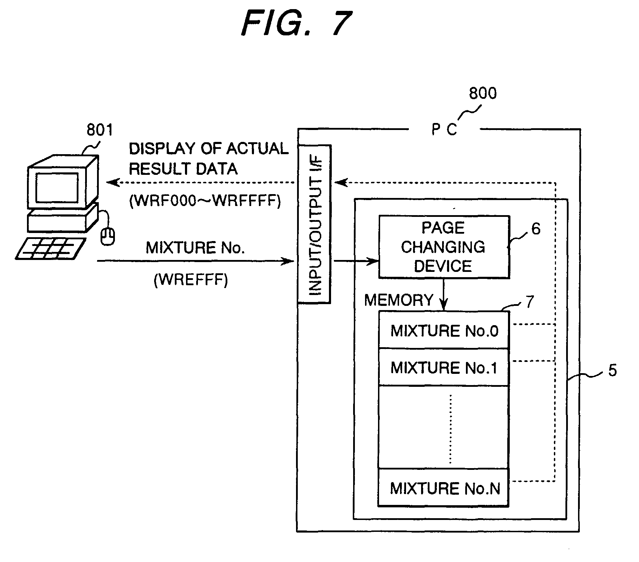

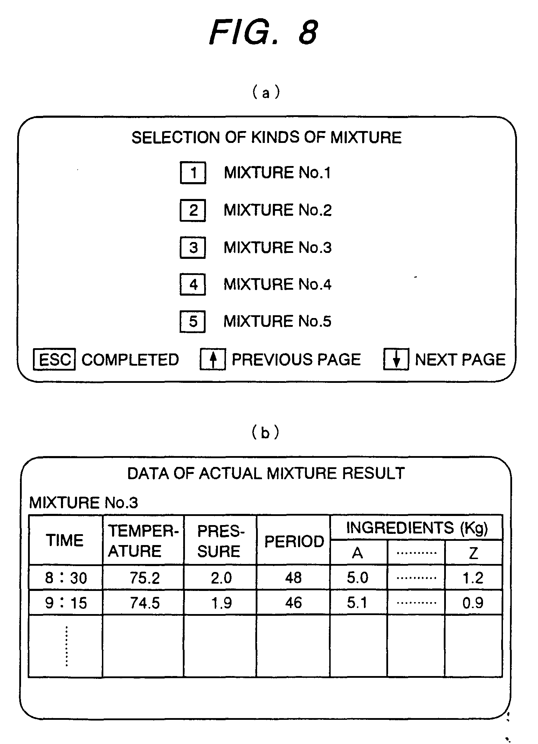

Flows of the data in the ingredient mixing system will be explained by referring to Fig. 7. In the memory card of the PC, one page is assigned for each mixture No., and the actual result data of each mixture No. is stored in each page. If the mixture No. is designated or specified from a key-board of the personal computer 801, the personal computer 801 sends a set command of I/O (i.e., a command for setting an inputted mixing No. into WREFFF) to PC 800. This inputted mixture No. is inputted into the page identifying area WREFFF of the PC 800 to be set as the page number. With this, in the expansion area WRF000 through WRFFFF of the PC 800, the data is changed with the page in the memory card corresponding to the No. which is set in the page specifying area. Next, the personal computer 801 sends a monitor command of the I/O to the PC 800 and reads out necessary data from the expansion area so as to process it into a data for display to be indicated on the display. For showing data of an another mixture No., the display is changed to that for the designated mixture No by inputting new mixture No. An example of a display appearing on the display screen will be explained by referring to Figs. 8 (a) and (b). Fig. 8 (a) shows a display for selecting the mixture No. to be displayed with the actual data thereof. The mixture No. to be displayed with the actual data is selected by clicking on a mouse or inputting from the key-board. For example, when displaying the mixture No. 3, the numeral "3" corresponding to the mixture No. 3 is selected by clicking on the mouse, or the numeral "3" is inputted from the key-board. With this, the display on the display is changed with such the display as shown in Fig. 8 (b). In this example of the display, also the time when the mixing of mixture No.3 is performed, the temperature at that time, the pressure, the time period thereof, and weight of each of ingredients actually mixed with are displayed in the display format as shown.

## Claims

1. A programmable controller comprising:
a CPU portion (10) having a CPU (11), a program memory (12)and an internal data memory (13);
an external I/O unit (14) being connected to said CPU portion (10) and for enabling a connection with a peripheral device; and
a control I/O unit (15) being connected to said CPU portion (10) and for enabling a connection with a target to be controlled, wherein said CPU (11) further includes an internal memory (1) in which at least a portion of data to be processed is stored temporarily, and further comprising:
an expansion memory device (5) being provided separately from said internal memory (1) and for storing the data to be processed by said CPU (11), wherein said peripheral device to be connected to said external I/O unit (14) includes a display, **CHARACTERIZED** in that said internal memory (1) is divided into a common area (2), an expansion area (4) and a block specifying area (3), that said expansion memory device (5) includes a memory area (7) which is divided into a plurality of blocks and assigned with a series of numbers thereto, and a block changing device (6) for reading out contents of the block corresponding to the number designated by the block specifying device and transferring it to said expansion area (4), and that said CPU (11) conducts operation process on the data transferred to said expansion area (4).

2. A programmable controller as described in Claim 1, wherein to said external I/O unit (14) is connected with a peripheral device (801) having a display, and contents of the block in the memory area (7) designated by said block specifying area (3) is displayed on said display of the peripheral device.
